Europäisches Patentamt

European Patent Office

Office européen des brevets

(19)

(11) Veröffentlichungsnummer : **0 356 729 B1**

# (12) EUROPÄISCHE PATENTSCHRIFT

(45) Veröffentlichungstag der Patentschrift :
**20.05.92 Patentblatt 92/21**

(51) Int. Cl.[5] : **C08L 77/00, // (C08L77/00, 9:02)**

(21) Anmeldenummer : **89114060.0**

(22) Anmeldetag : **29.07.89**

(54) **Thermoplastische Formmassen aus Polyamid und hydriertem Nitrilkautschuk.**

(30) Priorität : **13.08.88 DE 3827529**

(43) Veröffentlichungstag der Anmeldung :
**07.03.90 Patentblatt 90/10**

(45) Bekanntmachung des Hinweises auf die
Patenterteilung :
**20.05.92 Patentblatt 92/21**

(84) Benannte Vertragsstaaten :
**DE FR GB IT**

(56) Entgegenhaltungen :
**EP-A- 0 027 955**
**EP-A- 0 154 037**
**US-A- 4 803 247**

(56) Entgegenhaltungen :
**NEW POLYMERIC MATERIALS, REACTIVE PROCESSING AND PHYSICAL PROPERTIES, PROCEEDINGS OF THE INTERNATIONAL SEMINAR, Naples,9.-13. Juni 1986, Seiten 101-128, VNU Science Press BV, first published in 1987, Utrecht, NL; G.C. ALFONSO et al.: "Nitrilerubber-modified poly(epsilon-caprolactam) by activated anionic polymerization: Synthesis, molecular characterization andmorphology"**
**CHEMICAL ABSTRACTS, Band 109, Teil 2, 19. August 1988, Seiten 30-31, Zusammenfassung Nr. 94070s, Columbus, Ohio, US; G.C.ALFONSO et al.: "Nitrile rubber-modified poly(epsilon-caprolactam) by activated anionic polymerization: synthesis, molecularcharacterization and morphology", & NEW POLYM. MATER., PROC. INT. SEMIN. 1986 (PUB. 1987), 101-28**

(73) Patentinhaber : **BAYER AG**
**W-5090 Leverkusen 1 Bayerwerk (DE)**

(72) Erfinder : **Eichenauer, Herbert, Dr.**
**Gustav-Heinemann-Strasse 3**
**W-4047 Dormagen 1 (DE)**
Erfinder : **Buding, Hartmuth, Dr.**
**Liebermannstrasse 1**
**W-4047 Dormagen 1 (DE)**
Erfinder : **Merten, Josef, Dr.**
**Krünsend 30**
**W-4052 Korschenbroich 1 (DE)**
Erfinder : **Ott, Karl-Heinz, Dr.**
**Paul-Klee-Strasse 54**
**W-5090 Leverkusen 1 (DE)**

## Beschreibung

Die Erfindung betrifft thermoplastische Formmassen aus 70 bis 99,5 Gew.-% thermoplastischen Polyamiden und 30 bis 0,5 Gew.-% an hydriertem Nitrilkautschuk. Diese Formmassen besitzen gute Zähigkeiten, sehr gute thermoplastische Verarbeitbarkeit und insbesondere eine gute Witterungsstabilität. Gegebenenfalls können bis 29,5 Gew.-% an thermoplastischen Harzkomponenten mitverwendet werden.

Mischungen aus thermoplastischen Polyamiden und Nitrilkautschuken sind bekannt (vgl. z.B. DE-A 27 09 060); ebenso wurden Mischungen aus thermoplastischen Polyamiden und doppelbindungsfreien Kautschukkomponenten beschrieben (vgl. z.B. EP-A-0 194 705).

Die aus diesen Mischungen hergestellten Formteile besitzen zwar eine gute Zähigkeit, die ebenfalls geforderte Eigenschaftskombination aus guter thermoplastischer Verarbeitbarkeit bei der Formteilherstellung und guter Witterungsbeständigkeit der resultierenden Formteile wird jedoch nicht erreicht.

Es wurde nun gefunden, daß Mischungen aus thermoplastischen Polyamiden und hydrierten Nitrilkautschuken gute Zähigkeiten, sehr gute thermoplastische Verarbeitbarkeit und insbesondere gute Witterungsstabilität aufweisen.

Gegenstand der vorliegenden Erfindung sind thermoplastische Formmassen aus

A) mindestens 70 Gew.-% (70 bis 99,5 Gew.-%), vorzugsweise mindestens 75 Gew.-% (75 bis 97,5 Gew.-%), eines thermoplastischen Polyamids oder Mischungen mehrerer thermoplastischer Polyamide,

B) 30 bis 0,5 Gew.-%, vorzugsweise 25 bis 2,5 Gew.-%, insbesondere 24 bis 2,5 Gew.-%, eines hydrierten Nitrilkautschuks, sowie

C) 0 bis 29,5 Gew.-%, vorzugsweise 0 bis 27,5 Gew.-%, insbesondere 1 bis 22,5 Gew.-% (bezogen auf A + B + C) von thermoplastischen Harzkomponenten

D) sowie gegebenenfalls üblichen Additiven in üblichen, wirksamen Mengen in den thermoplastischen Formmassen.

Unter thermoplastischen Polyamiden (A) im Sinne dieser Erfindung werden bekannte Homopolyamide, Copolyamide und Mischungen dieser Polyamide verstanden. Es können dies teilkristalline und/oder amorphe Polyamide sein.

So können als teilkristalline Polyamide für die erfindungsgemäßen Formmassen Polyamid-6, Polyamid-6,6 und entsprechende Copolymerisate aus diesen beiden Komponenten eingesetzt werden. Weiterhin kommen teilkristalline Polyamide in Betracht, deren Säurekomponente ganz oder teilweise aus Terephthalsäure und-/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung bekannt ist.

Außerdem sind Polyamide zu nennen, die ganz oder teilweise aus Lactamen mit 7-12 C-Atomen im Ring, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6.

Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3′-Dimethyl-4,4′-diamino-dicyclohexylmethan, 3-Aminomethyl-3,5,5-trimethyl-cyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4′-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4′-Diamino-dicyclohexylmethan und ε-Caprolactam; oder aus Isophthalsäure, 3,3′-Dimethyl-4,4′-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4′-Diaminodicyclohexylmethans können auch Gemische der stellungsisomeren Diaminodicyclohexylmethane eingesetzt werden, die sich zusammensetzen aus

70 bis 99 Mol-% des 4,4′-Diamino-Isomeren

1 bis 30 Mol-% des 2,4′-Diamino-Isomeren

0 bis 2 Mol-% des 2,2′-Diamino-Isomeren und gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Bevorzugte hydrierte Nitrilkautschuke (B) im Sinne der Erfindung sind Produkte, die durch Hydrieren statistischer Copolymerisate aus 90 bis 45 Gew.-%, bevorzugt 85 bis 50 Gew.-%, insbesondere 82 bis 52 Gew.-% zumindest einem konjugierten Dien, 10 bis 55 Gew.-%, bevorzugt 15 bis 50 Gew.-%, insbesondere 18 bis 48 Gew.-% zumindest einem ungesättigten Nitril und 0 bis 10 Gew.-%, bevorzugt 0 bis 8 Gew.-% zumindest einem weiteren, mit konjugierten Dienen und ungesättigten Nitrilen copolymerisierbaren Monomeren erhalten wurden.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten, (Meth)Acrylsäureester mit 1 bis 12 Kohlenstoffatomen in der Alkoholkomponente, $\alpha$,ß-ungesättigte Mono- oder Dicarbonsäuren in Betracht.

Als beispielhaft sind zu nennen: für die Vinylaromaten Styrol, substituierte Styrole wie o-, m-, p-Methylstyrol, Ethylstyrol, ferner Vinylnaphthalin, Vinylpyridin, für die (Meth)Acrylsäureester Methyl(meth)acrylat, Ethyl(meth)acrylat, n-Butyl(meth)acrylat, tert.-Butyl(meth)acrylat, 2-Ethylhexyl(meth)acrylat, 2-Hydroxypropyl(meth)acrylat, für die ungesättigten Carbonsäuren $\alpha$,ß-ungesättigte Monocarbonsäuren mit 3 bis 5 Kohlenstoffatomen, wie Acrylsäure, Methacrylsäure und Crotonsäure sowie $\alpha$,ß-ungesättigte Dicarbonsäuren mit 4 bis 5 Kohlenstoffatomen, wie Malein-, Fumar-, Citracon- und Itaconsäure, ferner die Halbester der $\alpha$,ß-ungesättigten Dicarbonsäuren wie Maleinsäure-n-dodecylhalbester oder Fumarsäure-n-butylhalbester.

Als andere copolymerisierbare Verbindungen kommen in Betracht: Vinylchlorid, Vinylidenchlorid, N-Methylolacrylamid, Vinylalkylether mit 1 bis 4 Kohlenstoffatomen in der Alkylgruppe, Vinylester von Carbonsäuren mit 1 bis 18 Kohlenstoffatomen, wie Vinylacetat oder Vinylstearat.

Spezielle Beispiele für die zu hydrierenden Copolymerisate umfassen ein Acrylnitril-Isopren-Copolymerisat, ein Acrylnitril-Isopren-Butadien-Terpolymerisat, ein Acrylnitril-Isopren-n-Butylacrylat- Terpolymerisat, ein Acrylnitril-Butadien-Methylacrylat-Terpolymerisat, ein Acrylnitril-Butadien-n-Butylacrylat-Terpolymerisat, ein Acrylnitril-Butadien-2-Hydroxypropylmethacrylat-Terpolymerisat und ein Acrylnitril-Butadien-Methacrylsäure-Terpolymerisat. Ein Acrylnitril-Butadien-Copolymerisat ist besonders bevorzugt.

Die Herstellung hydrierter Nitrilkautschuke unter Erhalt der Nitrilgruppen ist bekannt.

Der Hydriergrad der Polymeren (B) (Prozentsatz der hydrierten C-C-Doppelbindungen bezogen auf die Gesamtzahl der ursprünglich im Polymer vorhandenen C-C-Doppelbindungen) wird IR- oder NMR-spektroskopisch bestimmt und, soll wenigstens 80 %, vorzugsweise wenigstens 90 %, insbesondere wenigstens 95 % betragen.

Die hydrierten Polymeren (B) sind gelfrei und in Ketonen, wie Aceton und Butanon, in Ethern, wie Tetrahydrofuran oder Dioxan oder in chlorierten Kohlenwasserstoffen, wie Dichlormethan oder Chlorbenzol, löslich.

Die erfindungsgemäßen Formmassen können übliche Additive, wie beispielsweise Gleit- und Entformungsmittel, Nucleierungsmittel, Stabilisatoren, Füll- und Verstärkungsstoffe, Flammschutzmittel sowie Farbstoffe in wirksamen Mengen und Kombinationen enthalten.

Weiterhin ist es möglich, den erfindungsgemäßen Formmassen thermoplastische Harzkomponenten C), z.B. Homo- oder Copolymerisate auf Basis von (substituiertem) Styrol (beispielsweise Styrol/Acrylnitril-Copolymere, $\alpha$-Methylstyrol/Acrylnitril-Copolymere) oder Methylmethacrylat (beispielsweise Polymethylmethacrylat), Polyphenylenether auf Basis von 2,6-Dimethylphenol bzw. deren Gemische mit schlagzäh modifiziertem Polystyrol (HIPS) oder Pfropfkautschuke, vorzugsweise auf Basis von gesättigten Kautschuken wie z.B. Ethylen/Propylen(Dien)-Kautschuk (EP(D)M-Kautschuk), Polybutylacrylat- oder Polysiloxan-Kautschuk mit z.B. Styrol, $\alpha$-Methylstyrol, kernsubstituiertem Styrol, Methylmethacrylat, Acrylnitril, Maleinsäureanhydrid, N-subst. Maleinimid, Vinylacetat oder Mischungen daraus, als Monomeren zum Aufbau der Pfropfhülle, zuzumischen.

Die Formmassen können in üblichen Mischaggregaten, wie Walzen, Knetern, Ein- und Mehrwellenextrudern hergestellt werden.

Wenn auch in den meisten Fällen beide Komponenten zweckmäßigerweise in einem Schritt gemischt werden, kann es manchmal auch empfehlenswert sein, zuerst die zweite Komponente wegzulassen und erst zu einem späteren Zeitpunkt zuzumischen.

So können die erfindungsgemäßen Formmassen auf den genannten Mischaggregaten hergestellt werden, indem die beiden Komponenten A) und B) gemeinsam aufgeschmolzen und homogenisiert werden oder indem der hydrierte Nitrilkautschuk B) in die Schmelze des Polyamids A) eingearbeitet wird.

Die Temperatur bei der Herstellung der Mischung sollte mindestens 10°C und zweckmäßig höchstens 80°C oberhalb des Schmelzpunktes des Polyamids liegen.

Die erfindungsgemäßen Formmassen können zur Herstellung von Formteilen durch Spritzguß und Extrusion verwendet werden, insbesondere wo die beschriebenen Eigenschaften gefordert werden, z.B. für Außenteile von Kraftfahrzeugen.

Beispiele

Eingesetzte Polymere (P.x)

P.A) Polyamid-6 mit einer relativen Viskosität (gemessen an einer 1 gw.-%igen Lösung in m-Kresol bei 25°C) von 3,55

P.B) Polyamid-66 mit einer relativen Viskosität von 3,50 (gemessen wie bei P.A)

P.C) Hydrierter Nitrilkautschuk, erhalten nach der Vorschrift in DE-OS 3 329 974, Beispiel 1. Zur Hydrierung wurde ein statistisches Acrylnitril/Butadien-Copolymer mit 34,9 Gew.-% Acrylnitril und einer Mooney-Viskosität ML 1 + 4/100°C = 29 eingesetzt. Der Hydrierungsgrad betrug 99,7 % (infrarotspektroskopisch bestimmt).

P.D) Statistisches Acrylnitril/Butadien-Copolymer mit einem Acrylnitrilgehalt von 34,9 Gew.-% und einer Mooney-Viskosität ML + 4/100°C = 29 als Vergleichssubstanz.

P.E) Pfropfkautschuk, erhalten durch radikalische Polymerisation von 20 Gew.-Teilen Methylmethacrylat in Gegenwart von 80 Gew.-Teilen eines Polybutadiens in Form eines Latex mit einem mittleren Teilchendurchmesser ($d_{50}$) von 400 nm.

Die Herstellung der erfindungsgemäßen Formmassen bzw. der Vergleichsmaterialien erfolgte auf einer Schneckenmaschine (ZSK 53) bei 280°C (60 Umdrehungen pro Minute).

Die Spritzgießverarbeitung zu Prüfstäben und Plättchen erfolgte auf einer Spritzgußmaschine Arburg 350 unter folgenden Bedingungen:

Massetemperatur: 270°C

Werkzeugtemperatur: 80°C

Spritzdruck: 840 bar

Nachdruck: 780 bar

Die Ermittlung der Prüfdaten erfolgte nach folgenden Normen:

| | |
|---|---|
| Izod-Kerbschlagzähigkeit | (J/m): ISO/R 180 |
| Streckspannung | (MPa): DIN 53 455 |
| Reißfestigkeit | (MPa): DIN 53 455 |
| Zug-E-Modul | (MPa): DIN 53 457 |
| 3,5 % Biegespannung | (MPa): ISO 178 |
| Streckdehnung | (%) |
| Fließlänge | (cm) |

Die Beurteilung der Witterungsbeständigkeit erfolgt visuell an Plättchen nach Bewitterung an einem Gerät der Firma Atlas.

Die Zusammensetzung der Formmassen sind in Tabelle 1 und die Prüfdaten in Tabelle 2 zusammengestellt.

Tabelle 1   Zusammensetzung der Formmassen

| Formmasse | P.A Gew.-Teile | P.B Gew.-Teile | P.C Gew.-Teile | P.D Gew.-Teile | P.E Gew.-Teile |
|---|---|---|---|---|---|
| 1 | 80 | – | 20 | – | – |
| 2 (Vergleich) | 80 | – | – | 20 | – |
| 3 (Vergleich) | 80 | – | – | – | 20 |
| 4 | – | 80 | 20 | – | – |
| 5 (Vergleich) | – | 80 | – | 20 | – |
| 6 (Vergleich) | – | 80 | – | – | 20 |

EP 0 356 729 B1

Tabelle 2   Prüfdaten der Formmassen

| Formmasse | Izod Kerb- schlag- zähig- keit | Reiß- festig- keit | Zug-E- Modul | 3,5 %- Biege- Spannung | Streck- spannung | Streck- spannung | Fließ- länge | Ober- flächen- qualität nach Be- witterung |
|---|---|---|---|---|---|---|---|---|
| 1 | 53 | 42 | 2100 | 65 | 52 | 4,3 | 41 | glatt |
| 2 (Vergleich) | 14 | 40 | 2100 | 61 | 44 | 3,9 | 27 | sehr rauh |
| 3 (Vergleich) | 60 | 42 | 2200 | 75 | 60 | 4,0 | 25 | rauh |
| 4 | 59 | 51 | 2400 | 71 | 60 | 5,7 | 41 | glatt |
| 5 (Vergleich) | 9 | 49 | 2350 | 66 | 51 | 4,5 | 31 | rauh |
| 6 (Vergleich) | 55 | 50 | 2200 | 65 | 55 | 4,5 | 30 | rauh |

**Patentansprüche**

1. Thermoplastische Formmassen, bestehend aus
A) mindestens 70 Gew.-% eines thermoplastischen Polyamids oder Mischungen mehrerer thermoplastischer Polyamide,
B) 30 bis 0,5 Gew.-% eines hydrierten Nitrilkautschuks mit einem Hydriergrad von mindestens 80 %, und
C) 0 bis 29,5 Gew.-% an thermoplastischen Harzkomponenten,
D) sowie gegebenenfalls üblichen Additiven in üblichen wirksamen Mengen in den thermoplastischen Formmassen.

2. Thermoplastische Formmassen nach Anspruch 1 bestehend aus A) 75 bis 97,5 Gew.-% eines thermoplastischen Polyamids und B) 25 bis 2,5 Gew.-% eines hydrierten Nitrilkautschuks.

3. Thermoplastische Formmassen gemäß den Ansprüchen 1 und 2, dadurch gekennzeichnet, daß der hydrierte Nitrilkautschuk B) einen Hydriergrad von mindestens 95 % besitzt.

4. Thermoplastische Formmassen gemäß den Ansprüchen 1 und 2 mit Polyamid-6 und/oder Polyamid-6,6 als thermoplastisches Polyamid.

5. Thermoplastische Formmassen gemäß Ansprüchen 1 bis 4 mit 1 bis 22,5 Gew.-% an thermoplastischen Harzkomponenten C) und 24 bis 2,5 Gew.-% eines hydrierten Nitrilkautschuks B).

6. Thermoplastische Formmassen gemäß den Ansprüchen 1 bis 5 mit dem durch Hydrierung statistischer Butadien/Acrylnitril-Copolymerisate erhaltenen Produkt als hydrierter Nitrilkautschuk.

7. Thermoplastische Formmassen gemäß Ansprüchen 1 bis 6, dadurch gekennzeichnet, daß der hydrierte Nitrilkautschuk B) durch Hydrierung statistischer Copolymerisate aus
90 - 45 Gew.-% zumindest eines konjugierten Diens,
10 - 55 Gew.-% eines ungesättigten Nitrils und gegebenenfalls
0 - 10 Gew.-% (bezogen auf Gewicht des Copolymerisats aus Dien plus Nitril) zumindest eines weiteren, mit konjugierten Dienen und ungesättigten Nitrilen copolymerisierbaren Monomeren erhalten wird.

8. Thermoplastische Formmassen gemäß Anspruch 7, dadurch gekennzeichnet, daß
als konjugierte Diene
Butadien-1,3,
2-Methyl-Butadien 1,3,
2,2-Dimethylbutadien-1,3 und
Pentadien-1,3,
als ungesättigte Nitrile
Acrylnitril und Methacrylnitril
und als weitere Monomere
Vinylaromaten, (Meth)-Acrylsäureester mit 1 - 12-C-Atomen in der Alkoholkomponente des Ester oder $\alpha,\beta$-ungesättigte Mono- oder Dicarbonsäuren
eingesetzt werden.

9. Thermoplastische Formmassen gemäß Ansprüchen 1 bis 8, dadurch gekennzeichnet, daß die hydrierten Polymeren B) gelfrei und in Ketonen, Ethern oder in chlorierten Kohlenwasserstoffen löslich sind.


**Revendications**

1. Matières à mouler thermoplastiques, constituées
A) d'au moins 70 % en poids d'un polyamide thermoplastique ou de mélanges de plusieurs polyamides thermoplastiques,
B) de 30 à 0,5 % en poids d'un caoutchouc nitrilique hydrogéné ayant un degré d'hydrogénation d'au moins 80 %, et
C) de 0 à 29,5 % en poids de composants thermoplastiques du type résines,
D) ainsi que, le cas échéant, d'additifs classiques présents en quantités efficaces habituelles dans les matières à mouler thermoplastiques .

2. Matières à mouler thermoplastiques suivant la revendication 1, constituées A) de 75 à 97,5 % en poids d'un polyamide thermoplastique et B) de 25 à 2,5 % en poids d'un caoutchouc nitrilique hydrogéné.

3. Matières à mouler thermoplastiques suivant les revendications 1 et 2, caractérisées en ce que le caoutchouc nitrilique hydrogéné B) a un degré d'hydrogénation d'au moins 95 %.

4. Matières à mouler thermoplastiques suivant les revendications 1 et 2, contenant du polyamide-6 et/ou

7

du polyamide-6,6 comme polyamide thermoplastique.

5. Matières à mouler thermoplastiques suivant les revendications 1 à 4, contenant 1 à 22,5 % en poids de composants thermoplastiques C) du type d'une résine et 24 à 2,5 % en poids d'un caoutchouc nitrilique hydrogéné B).

6. Matières à mouler thermoplastiques suivant les revendications 1 à 5, contenant comme caoutchouc nitrilique hydrogéné le produit obtenu par hydrogénation de copolymères statistiques butadiène/acrylonitrile.

7. Matières à mouler thermoplastiques suivant les revendications 1 à 6, caractérisées en ce que le caoutchouc nitrilique hydrogéné B) est obtenu par hydrogénation de copolymères statistiques de

90 - 45 % en poids d'au moins un diène conjugué,

10 - 55 % en poids d'un nitrile non saturé et, le cas échéant,

0 - 10 % en poids (par rapport au poids du copolymère de diène plus nitrile) d'au moins un autre monomère copolymérisable avec des diènes conjugués et des nitriles non saturés.

8. Matières à mouler thermoplastiques suivant la revendication 7, caractérisées en ce qu'on utilise comme diènes conjugués

le butadiène-1,3,

le 2-méthylbutadiène-1,3,

le 2,2-diméthylbutadiène-1,3 et

le pentadiène-1,3,

comme nitriles non saturés

l'acrylonitrile et le méthacrylonitrile

et comme autres monomères

des monomères aromatiques vinyliques, des esters d'acide (méth)acrylique ayant 1 à 12 atomes de carbone dans le composant alcool de l'ester ou des acides monocarboxyliques ou dicarboxyliques à non-saturation $\alpha,\beta$.

9. Matières à mouler thermoplastiques suivant les revendications 1 à 8, caractérisées en ce que les polymères hydrogénés B) sont dépourvus de gel et sont solubles dans des cétones, des éthers ou des hydrocarbures chlorés.

**Claims**

1. Thermoplastic moulding compounds consisting of

A) at least 70% by weight of a thermoplastic polyamide or mixtures of several thermoplastic polyamides,

B) 30 to 0.5% by weight of a hydrogenated nitrile rubber having a degree of hydrogenation of at least 80% and

C) 0 to 29.5% by weight of thermoplastic resin components

D) and, optionally, standard additives in typical effective quantities in the thermoplastic moulding compounds.

2. Thermoplastic moulding compounds as claimed in claim 1 consisting of A) 75 to 97.5% by weight of a thermoplastic polyamide and B) 25 to 2.5% by weight of a hydrogenated nitrile rubber.

3. Thermoplastic moulding compounds as claimed in claims 1 and 2, characterized in that the hydrogenated nitrile rubber B) has a degree of hydrogenation of at least 95%.

4. Thermoplastic moulding compounds as claimed in claims 1 and 2 containing polyamide-6 and/or polyamide-6,6 as the thermoplastic polyamide.

5. Thermoplastic moulding compounds as claimed in claims 1 to 4 containing 1 to 22.5% by weight of thermoplastic resin components C) and 24 to 2.5% by weight of a hydrogenated nitrile rubber B).

6. Thermoplastic moulding compounds as claimed in claims 1 to 5 containing the product obtained by hydrogenation of statistical butadiene/acrylonitrile copolymers as the hydrogenated nitrile rubber.

7. Thermoplastic moulding compounds as claimed in claims 1 to 6, characterized in that the hydrogenated nitrile rubber B) is obtained by hydrogenation of statistical copolymers of

90 to 45% by weight of at least one conjugated diene,

10 to 55% by weight of an unsaturated nitrile and optionally

0 to 10% by weight (based on the weight of the copolymer of diene plus nitrile) of at least one other monomer copolymerizable with conjugated dienes and unsaturated nitriles.

8. Thermoplastic moulding compounds as claimed in claim 7, characterized in that 1,3-butadiene, 2-methyl-1,3-butadiene, 2,2-dimethyl-1,3-butadiene and 1,3-pentadiene are used as the conjugated dienes while acrylonitrile and methacrylonitrile are used as the unsaturated nitriles and aromatic vinyl compounds, (meth)acrylates containing 1 to 12 carbon atoms in the alcohol component of the ester or $\alpha,\beta$-unsaturated mono- or dicarboxylic acids are used as further monomers.

9. Thermoplastic moulding compounds as claimed in claims 1 to 8, characterized in that the hydrogenated polymers B) are gel-free and soluble in ketones, ethers or in chlorinated hydrocarbons.